# EUROPÄISCHE PATENTSCHRIFT

(11) **EP 0 768 584 B1**
(45) Veröffentlichungstag und Bekanntmachung des Hinweises auf die Patenterteilung: **21.11.2001**
(21) Anmeldenummer: 96113145.5
(22) Anmeldetag: 16.08.1996
(51) Int. Cl.: G05B 13/02

(54) **Verfahren zur Überwachung einer Maschine oder Anlage**
Method for monitoring a machine or plant
Méthode de surveillance d'une machine ou installation

(30) Priorität: 10.10.1995 DE 19537694
(43) Veröffentlichungstag der Anmeldung: 16.04.1997
(73) Patentinhaber: Schenck Vibro GmbH, 64293 Darmstadt (DE)
(72) Erfinder: Wehhofer, Josef, Dr., 64289 Darmstadt (DE); Voegele, Joachim, 64560 Riedstadt (DE); Wolf, Harald, 64297 Darmstadt (DE)
(74) Vertreter: Behrens, Helmut, Dipl.-Ing.

(56) Entgegenhaltungen:
- EP-A- 0 405 149
- DD-A- 205 998
- DE-A- 4 447 288
- H.P.PREUSS: "Fuzzy control in process automation" September 1993 , INTERNATIONAL JOURNAL OF SYSTEMS SCIENCE , LONDON,U.K. XP000613208 * Seite 1849 - Seite 1861, Absatz 3-4; Abbildungen 8-12 *
- ENGINEERING AND AUTOMATION, Bd. 14, Nr. 6, 1.November 1992, Seiten 10-11, XP000331060 WEGMANN H: "FUZZY CONTROL WITH SIMATIC S5"

## Beschreibung

Die Erfindung betrifft ein Verfahren zur Überwachung einer Maschine oder Anlage, bei dem Signale von Sensoren (10,11) an Maschinen- oder Anlagenteilen einer Signalaufbereitung zugeführt werden und bei dem die aufbereiteten Sensorsignale weiter verarbeitet werden.

Zur Betriebsüberwachung und zur Diagnostik von Maschinen oder Anlagen werden beispielsweise Schwingungssignale wie Wellen- oder Lagerschwingungen und Temperatmeßsignale herangezogen.

Es ist aus der DD-Patentschrift 2410211 bekannt, Maschinen oder Anlagen wie Kraftwerksmaschinen, Turbinen oder Pumpen mit Hilfe der Schwingungsmeßtechnik bzw. Schwingungsanalyse zu überwachen und Schäden zu erkennen und zu klassifizieren. Aus dem mittleren Betrag der stochastischen Signalanteile der an der Maschine gemessenen Schwingungssignale wird durch multiplikative oder additive Korrekturfunktionen der Einfluß von Betriebs- und Umweltparametern eliminiert. Die Korrekturen sind Differenzengleichungen, deren Koeffizienten nach einem Suchalgorithmus schrittweise bei intakter Maschine variiert werden, bis zwischen korrigierter Größe und Betriebs- und Umweltparametern keine statistische Abhängigkeit mehr feststellbar ist. Man erhält so abgeleitete Größen, die sich im wesentlichen nur noch durch Schadensprozesse ändern und die die Klassifizierung von Schäden ermöglichen. Unter Zuhilfenahme von Schadensmustern, d. h. durch Charakterisierung von Änderungen des Schwingungszustandes gegenüber definierten Bezugzuständen, erfolgt mit Mustererkennungsverfahren die Klassifizierung von Schäden.

Wissensbasierte Überwachungsverfahren liefern Unterstützung bei der Auswertung und Interpretation von Meßergebnissen. Aus der DE 44 06 723 A1 ist ein wissensbasiertes Überwachungssystem ("Expertensystem") bekannt, das aus Mustervergleichen Schlußfolgerung zuläßt. Es ist ein Verfahren offenbart, das aus der Aufbereitung von Schwingungssignalen erhaltene Ergebnisse und weitere, den Betriebszustand der Anlage beschreibende, physikalische Größen zu einem Betriebszustandsvektor zusammenfaßt. Der normale Betriebszustand wird durch einen gleichstrukturierten Referenzvektor dargestellt. Die Beschreibung potentieller Fehler erfolgt in einer Interpretationsmatrix (Wissensbasis) aus Mustervektoren. Solche Mustervektoren werden für jeden zu diagnostizierenden Zustand erstellt. Der Referenzvektor wird laufend mit dem aktuellen Betriebszustandsvektor verglichen und die Differenz beider Vektoren gebildet. Aus dieser Differenz und Elementen der Interpretationsmatrix wird für jedes Element des Betriebszustandsvektors eine Wahrscheinlichkeitsaussage gebildet, die zu einem Gesamtwahrscheinlichkeitswert eines durch einen Mustervektor ausgedrückten Betriebszustandes führt. Diejenige, durch einen Mustervektor festgelegte Kennwertkombination aus der Liste möglicher Fehlerursachen, welche die höchste Wahrscheinlichkeitssumme aufweist, wird als die den Anlagenzustand am besten beschreibende Endwertkombination für den jeweiligen Zustandsvektor ausgegeben.

Aus der Veröffentlichung "Ein Expertensystem zur Zustandsdiagnose an Dampfturbinen" (Autor P.Wutsdorff, VGB Kraftwerkstechnik, 71. JG, Heft 5, Mai 1991, Seiten 426 bis 430) ist ein Expertensystem für die Überwachung und Zustandsdiagnose an Dampfturbinen bekannt, das auf der Modellierung in Form von sogenannten "semantischen Netzen" und auf der Wissensdarstellung in Form von Objekt-Attribut-Wert-Tripeln beruht. Das entsprechend aufgearbeitete Wissen wird durch Kombinationsregeln dargestellt in der Form: WENN Bedingung 1 UND Bedingung 2 UND ... DANN ist Hypothese 1 = wahr mit sich daraus ergebenden Aktionen 1,2, ... Bedingungen sind hier stets Vergleiche von Meßgrößen mit den Erwartungswerten oder Hypothesen aus anderen Regeln. Man erhält schließlich eine Auflistung der festgestellten Abweichungen, ferner die sich aus diesen Abweichungen ergebende Diagnosen und schließlich Empfehlungen für einzelne Maßnahmen. Auch bei diesem Verfahren ist eine umfangreiche Wissensbasis erforderlich, die zudem ganz speziell auf die Dampfturbinenüberwachung zugeschnitten ist.

Aus der DE-A-44 47 288 ist ein Maschinenfehlerdiagnosesystem und -verfahren bekannt. Die Haupttechnik, die zur Fehlerdiagnose verwendet wird, ist ein Fehlerdiagnosenetzwerk, das auf einer modifizierten ARTMAP-Neuralnetzwerkarchitektur basiert. Zum Analysieren komplexer Maschinenzustände wird ein Hypothesen- und Testverfahren eingesetzt, das mit dem Fehlerdiagnosenetzwerk arbeitet.

Bei allen genannten Überwachungsverfahren ist ein umfangreiches Know How zur Überwachung vom Anwender einzubringen.

Der Erfindung liegt die Aufgabe zugrunde, ein Überwachungsverfahren zu schaffen, das auf einfache Weise an die unterschiedlichsten Überwachungsaufgaben anpassbar ist und dessen Wissensbasis auf der Nutzung und Kombination von Wissensbasen für standardisierte Teilüberwachungen beruht.

Erfindungsgemäß wird diese Aufgabe durch die Merkmale des Patentspruchs 1 gelöst. Das erfindungsgemäße Überwachungsverfahren beruht auf der Kombination von Teilüberwachungen. Die Teilüberwachungen sind je für sich intelligent und beruhen auf adaptiven, regelbasierten Verfahren. Die Konfiguration der Gesamtüberwachung durch Erfassen applikationsspezifischer Überwachungs-Komponenten und ihre Verknüpfung kann in vorteilhafter Weise vom Anwender der Überwachung selbst durch Anpassung an seine spezifischen Erfordernisse vorgenommen werden, da nur ihm vertraute modulare Komponenten zum Einsatz kommen. Diese Komponenten sind das Abbild von Programm-Codes in einer dafür geeigneten Applikationssprache. Diese ermöglicht Daten und die gesamte Funktionalität von bereits existierenden und dem Anwender bekannten modularen Überwachungs-Komponenten in wenigen Zeilen Programm-Code zu vereinen. Diese Vorgehensweise erlaubt es, sehr mächtige Systeme aus elementaren Komponenten aufzubauen. Die Anwendung der Fuzzy-Logik vereinfacht die Formulierung von Regeln, da hierbei einfache linguistische Formulierungen verwendet werden können. Bei der Fuzzy-Logik bietet sich auch die Verwendung selbstlernender Ausführungen an. Die Funktionalität von Teilüberwachungen findet sich in vorteilhafter Weise in wenigen Zeilen Programm-Code der nächst übergeordneten Überwachung wieder, mit denen die untergeordneten Teilüberwachungen repräsentiert werden. Vorteilhaft können auch mehrere hierarchische Ebenen aufgebaut werden, das heißt die Überwachung ist rekursiv aufgebaut, wobei in jedem Schritt eine Kombination von Prozeßobjekten vorgenommen wird.

Anhand der Zeichnungen wird im folgenden die Erfindung näher erläutert. Es zeigen:
- Fig. 1: eine schematische Darstellung einer Einheit zur Überwachung eines Anlagenelements
- Fig. 2: die Bildung der Fuzzy-Zugehörigkeitsfunktion für die Eingangsgrößen der Einheit nach Fig. 1
- Fig. 3: die Fuzzy-Zugehörigkeitsfunktion für die Eingangsgröße BCU bei einer Lagerüberwachung
- Fig. 4: eine schematische Darstellung einer Anlagen-Überwachungseinheit
- Fig. 5: eine Übersichtsdarstellung einer komplexen Überwachung
- Fig. 6: den Programm-Code SIM_DIAG zur Vibrations-Überwachung

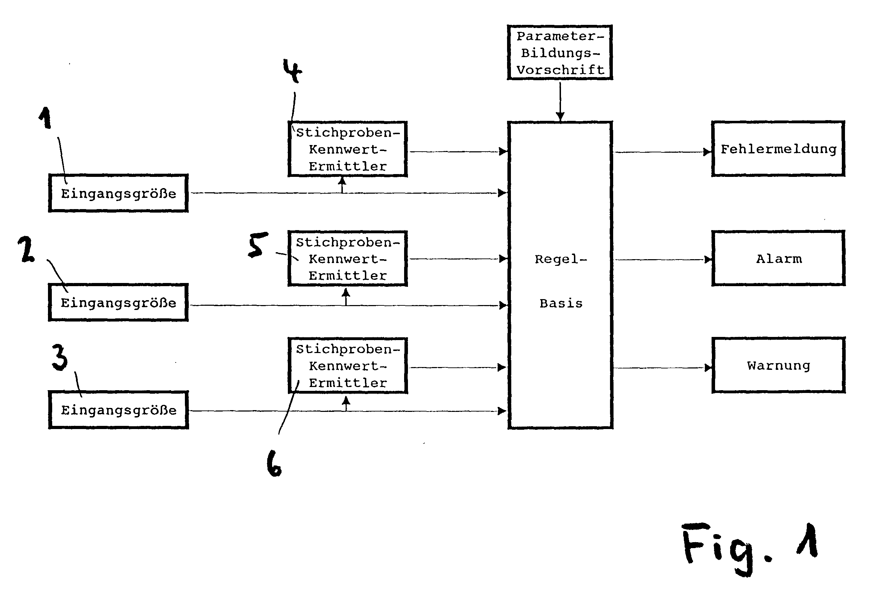

In Fig. 1 ist schematisch dargestellt eine Einheit zur Überwachung eines Anlagenelements bzw. -bauteils. Die Überwachungseinheit weist drei Eingangskanäle 1,2,3 auf. Wählt man als Beispiel die Überwachung eines Lagers für ein rotierendes Teil, so werden den Eingangskanälen 1,2,3 die Eingangsgrößen Lagerlast, BCU-Wert und Lagertemperatur zugeführt. Die Überwachungseinheit verarbeitet die Eingangssignale mittels eines adaptiven regelbasierten Verfahrens, wobei Grundlagen der Regelbasis beispielsweise die Fuzzy-Logik ist. Die Grundlagen der Fuzzy-Regelungen sind beispielsweise aus der Veröffentlichung "Fuzzy Control-heuristische Regelung mittels unscharfer Logik" in "atp" (1992), 4, Seiten 176-183 und 5, Seiten 239-246 bekannt. Die Anzahl der Eingangs- und Ausgangsgrößen einer Fuzzy-Regelung kann grundsätzlich beliebig sein.

Die Eingangsgrößen Lagerlast, BCU-Wert und Lagertemperatur werden qualitativ gewertet, wie z. B. durch die Aussage klein, mittel oder groß. Zugehörigkeitsfunktionen quantifizieren diese qualitativen Aussagen. Jedem möglichen Zahlenwert einer Eingangsgröße werden damit Zugehörigkeiten zu den qualitativen Aussagen zugewiesen. Die Anzahl dieser Zugehörigkeitsfunktionen entspricht der Anzahl linguistischer Werte einer Eingangsgröße, im Beispiel sind dies drei. Die Zugehörigkeitsfunktionen bilden die Basis zur quantitativen Auswertung durch WENN-DANN Regeln und UND oder ODER-Verknüpfungen, die in einer Regelbasis niedergelegt sind. Für eine Kombination linguistischer Werte der Eingangsgrößen erhält man als Folgerung einen linguistischen Wert für eine Ausgangsgröße. Zum Schluß erfolgt gegebenenfalls die als Defuzzifizierung bezeichnete Berechnung des Wertes der Ausgangsgröße.

Koordinatenursprung und Skalierung der Zugehörigkeitsfunktion sind in der Regel unterschiedlich und von den aktuellen Eingangsgrößen abhängig; sie können meist auf einfache Art aus statistischen Kennwerten der Eingangsgrößen abgeleitet werden.

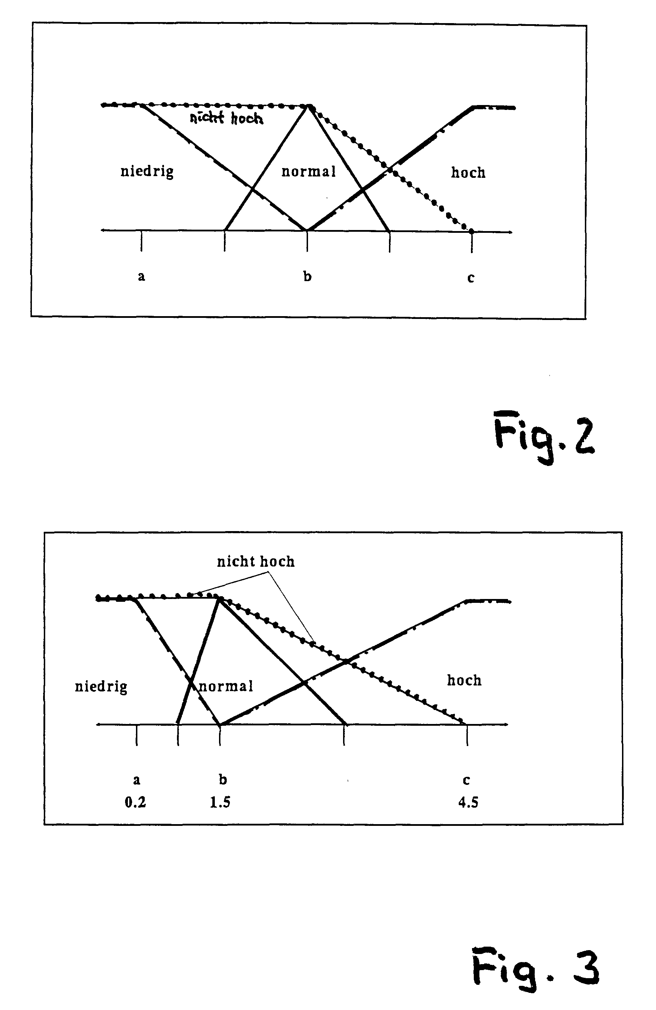

Zur Ermittlung der benötigten statistischen Kenngrößen ist eine Lernphase vorgesehen. Dabei werden gemäß Fig. 1 in einem Stichproben-Kennwert-Ermittler 4,5,6 aus den Eingangsgrößen statistische Kennwerte gebildet. Aus diesen Kennwerten und einer Parameter-Bildungsvorschrift werden die Parameter "Koordinatenursprung" und "Skalierungsfaktor" für die einzelnen Zugehörigkeitsfunktionen abgeleitet, wie dies anhand der Fig. 2 und 3 im folgenden für das Beispiel Lagerüberwachung näher beschrieben ist.

Die Fig. 2 zeigt die standardisierten, aus den Daten des Kennwert-Ermittlers und der Bildungsvorschriften geformten Zugehörigkeitsfunktionen "niedrig", "normal", "nicht hoch" und "hoch". Die Zugehörigkeitsfunktion "niedrig" ist durch gestrichelte Linien gekennzeichnet, die Zugehörigkeitsfunktion "hoch" durch strichpunktierte Linien, die Zugehörigkeitsfunktion "normal" durch ununterbrochene Linien und die Zugehörigkeitsfunktion "nicht hoch" durch einen punktierten Linienzug. Im Falle der dreiecksförmigen Zugehörigkeitsfunktion "normal" stellt die Abszissenlage b der Spitze bei z. B. der Lagerlastbetrachtung den statistischen Mittelwert der Meßwerte für die Lagerlast dar, während die Abszissenlage a die Zugehörigkeitsfunktion "niedrig" und die Abszissenlage c die Zugehörigkeitsfunktion "hoch" prägt; a und b werden ebenfalls aus der statistischen Auswertung des Meßwerts Lagerlast abgeleitet.

Die Fig. 3 zeigt die Zugehörigkeitsfunktion für das Merkmal BCU (Wälzlagerschadenskenngröße) nach der Anwendung der Bildungsvorschrift und der Daten der statistischen Auswertung im Kennwert-Ermittler mit a = 0,2, b = MIN (statistischer Mittelwert, 3), c = 3b.

**Regelblock für die Überwachung, Ausgangsgröße ist Lagerschaden:**
Wenn keine Regel zutrifft, dann Lagerschaden niedrig
Wenn der BCU-Wert zu hoch ist, dann Lagerschaden sehr hoch
Wenn der BCU-Wert sehr hoch ist und die Temperatur hoch ist, dann ist der Lagerschaden sehr hoch
Wenn der BCU-Wert nicht niedrig ist und die Temperatur zu hoch ist, dann Lagerschaden hoch
Wenn die Lagerlast hoch ist und der BCU-Wert hoch ist und die Temperatur nicht hoch ist, dann ist Lagerschaden niedrig
Wenn die Temperatur sehr hoch ist und der BCU-Wert hoch ist, dann ist Lagerschaden hoch
Wenn der BCU-Wert nicht hoch ist, dann Lagerschaden normal
Wenn der BCS-Innenring zu hoch, dann Lagerschaden zu hoch
Wenn der BCS-Aussenring zu hoch, dann Lagerschaden zu hoch
Wenn der BCS-Käfig zu hoch, dann Lagerschaden zu hoch
Wenn der BCS-Wälzkörper zu hoch, dann Lagerschaden zu hoch

Damit ist die Regelbasis vorhanden und parametriert und die Überwachungsfunktion kann aktiviert werden. Mit Hilfe der Regelbasis kann man als Ausgangsgröße z. B. die Aussage: "Wälzlager Innenringschaden" erhalten oder auch nur die Auslösung eines Alarms, wozu das nachfolgende Programm, LAGER.UEB dient:

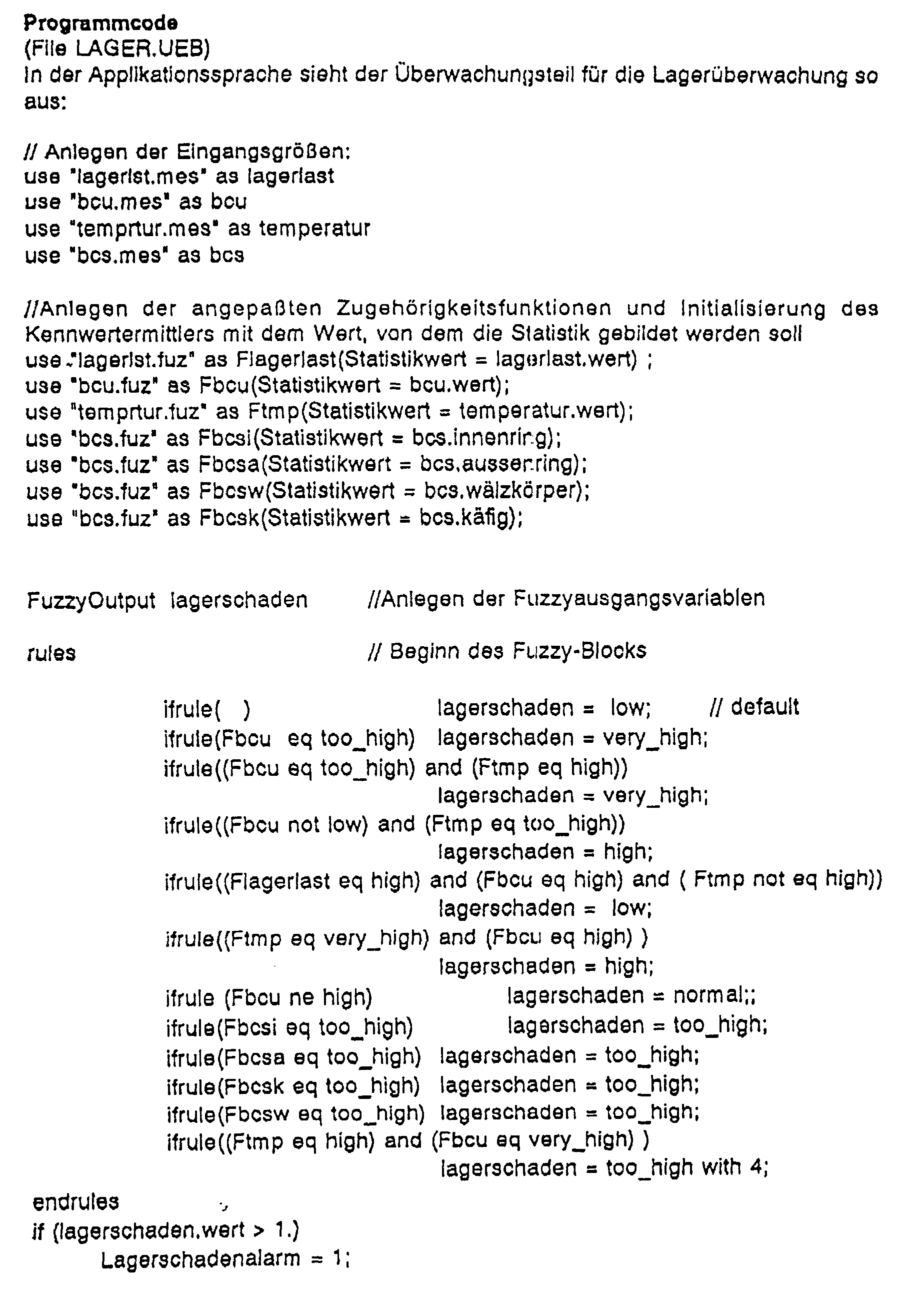

Fbcsi, Fbcsa, Fbcsk und Fbcsw sind dabei Kenngrößen für die Erkennung von Schäden an einem üblichen Wälzlager mit Innenring (Index i), Außenring (Index a), Wälzkörper (Index w) und Käfig (Index k).

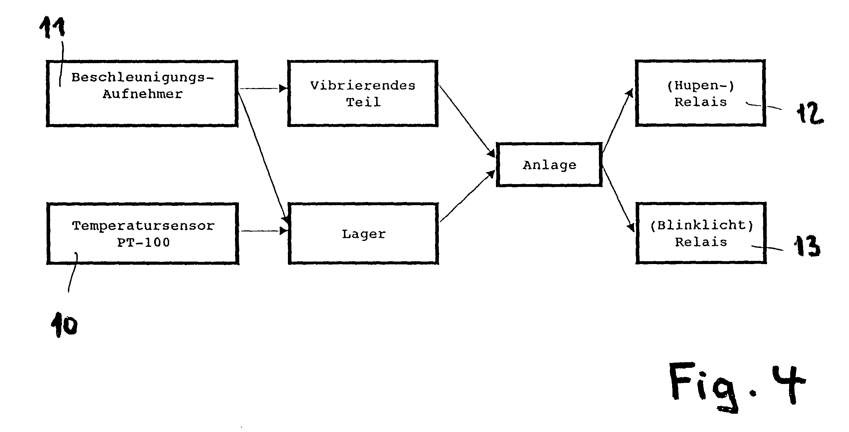

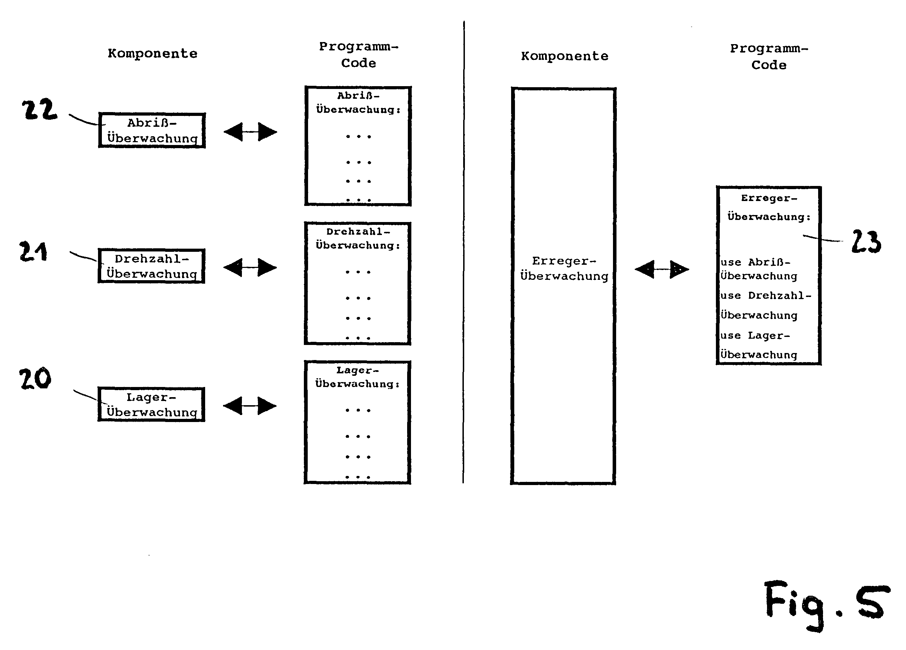

In Fig. 4 ist dargestellt die Gesamtüberwachung einer Anlage auf Lagerschäden und Vibration.

Dazu werden ein Temperatursensor 10 und z. B. zwei Beschleunigungsaufnehmer 11 an den zu überwachenden Bestandteilen der Anlage (Lager, vibrierendes Teil) montiert. Das Überwachungsergebnis steht optisch und akustisch an Relais 12,13 zur Verfügung.

Um wie im Beispiel nach Fig. 4 eine applikationsspezifische Gesamtüberwachung zu installieren, werden aus einem Vorrat von Bestandteilen, den Prozeßobjekten, die benötigten zusammengestellt ("Inventur") wie in folgendem Beispiel:
Sensoren:
   - ein (zwei) Beschleunigungsaufnehmer 11
   - ein Temperatursensor 10 (PT-100)
Aktoren:
   - eine Hupe 12 für Alarm/Abschalten
   - ein Blinklicht 13 für Warnung
Maschinenobjekte:
   - Lager (Programm SIMLAGER oder LAGER.UEB )
   - Vibrierendes Teil (Programm SIM_VIB)
Superobjekt:
   - Zusammenfassung der Vibrations-Überwachung (Programm SIM_DIAG)

Die beteiligten Prozeßobjekte werden durch "Verdrahtung" miteinander verbunden. Im Beispiel werden die Sensoren 10,11 an die Maschinenobjekte, die Ausgänge der Maschinenobjekte an das Superobjekt und die Ausgänge des Superobjekts an die Aktoren 12,13 angeschlossen. Die Sensoren 10,11 sind physikalisch an den entsprechenden Bauteilen angebracht. Im Beispiel kann der Beschleunigungsaufnehmer 11 mehrfach genutzt werden, nämlich zur Lagerüberwachung und zur Vibrationsüberwachung, was sich in der Verdrahtung widerspiegelt.

Die Gesamtüberwachung ist modular aufgebaut und umfaßt im Beispiel als eines der Module die anhand des Programm-Codes "LAGER.UEB" erläuterte Lagerüberwachung oder ein ähnliches Modul wie das weiter unten beschriebene "SIMLAGER".

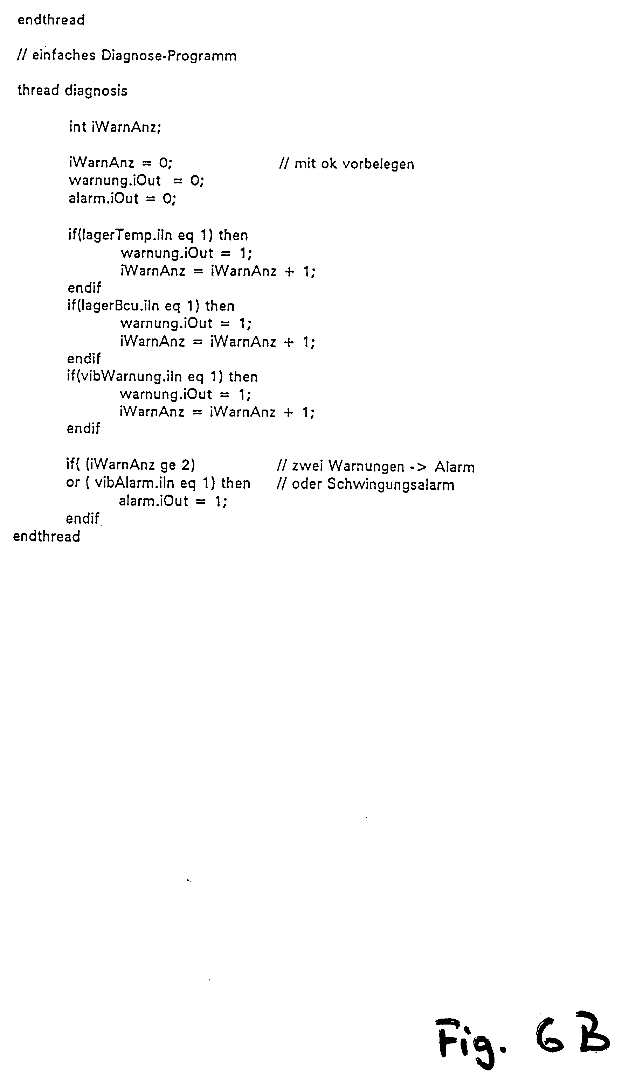

Das Erzeugen eines neuen Maschinenobjekts für z. B. eine Vibrationsüberwachung ist auf einfache Weise lediglich durch Abänderung des Programms SIM_VIB möglich, das für eine Lagerüberwachung durch Abändern des Programms SIMLAGER; ähnlich wird ein neues Superobjekt durch Abändern des Programms SIM_DIAG, (Fig. 6) erzeugt.

Im Programm-Code zur Verfügung gestellt werden alle Sensoren und Aktoren, die Meßgeräte, Hilfsdateien für die Fuzzy Regelung, Meßwerte und Grenzwerte.

Die Einbindung des Temperatursensors 10 (PT-100) beispielsweise zeigt der nachfolgende Programm-Code-Ausschnitt File "PT-100.INP".

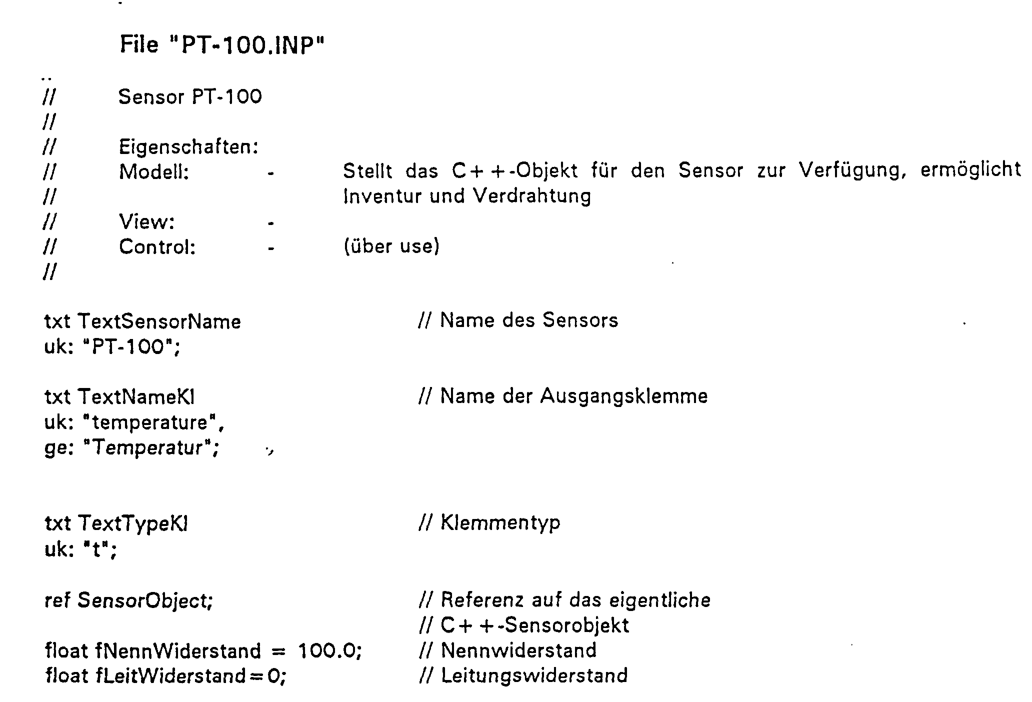

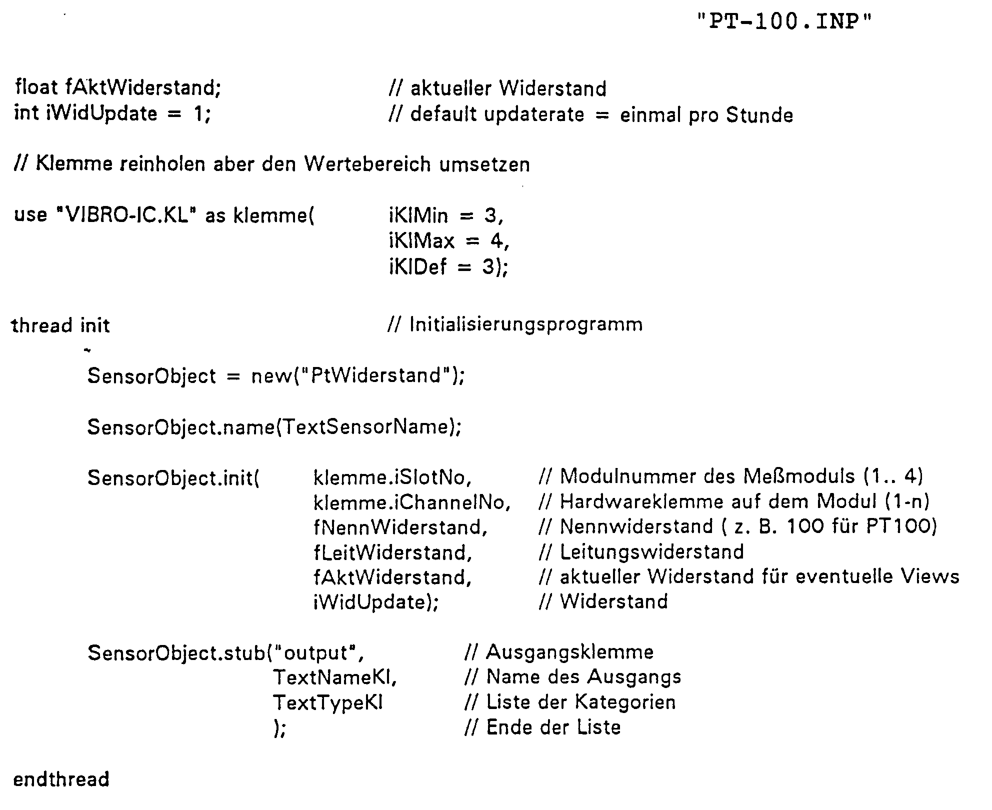

Ein Maschinenobjekt für eine einfache Lagerüberwachung mit lediglich den Temperatur- und BCU-werten auf der Regelbasis exakter Formulierungen ist durch den nachfolgenden Programm-Code Ausschnitt SIMLAGER gebildet, der sich vom anfangs beschriebenen Programm-Code Ausschnitt LAGER.UEB durch Nichtheranziehen der Fuzzy-Logik und den Verzicht auf das Heranziehen des Meßwertes "Lagerlast" unterscheidet.

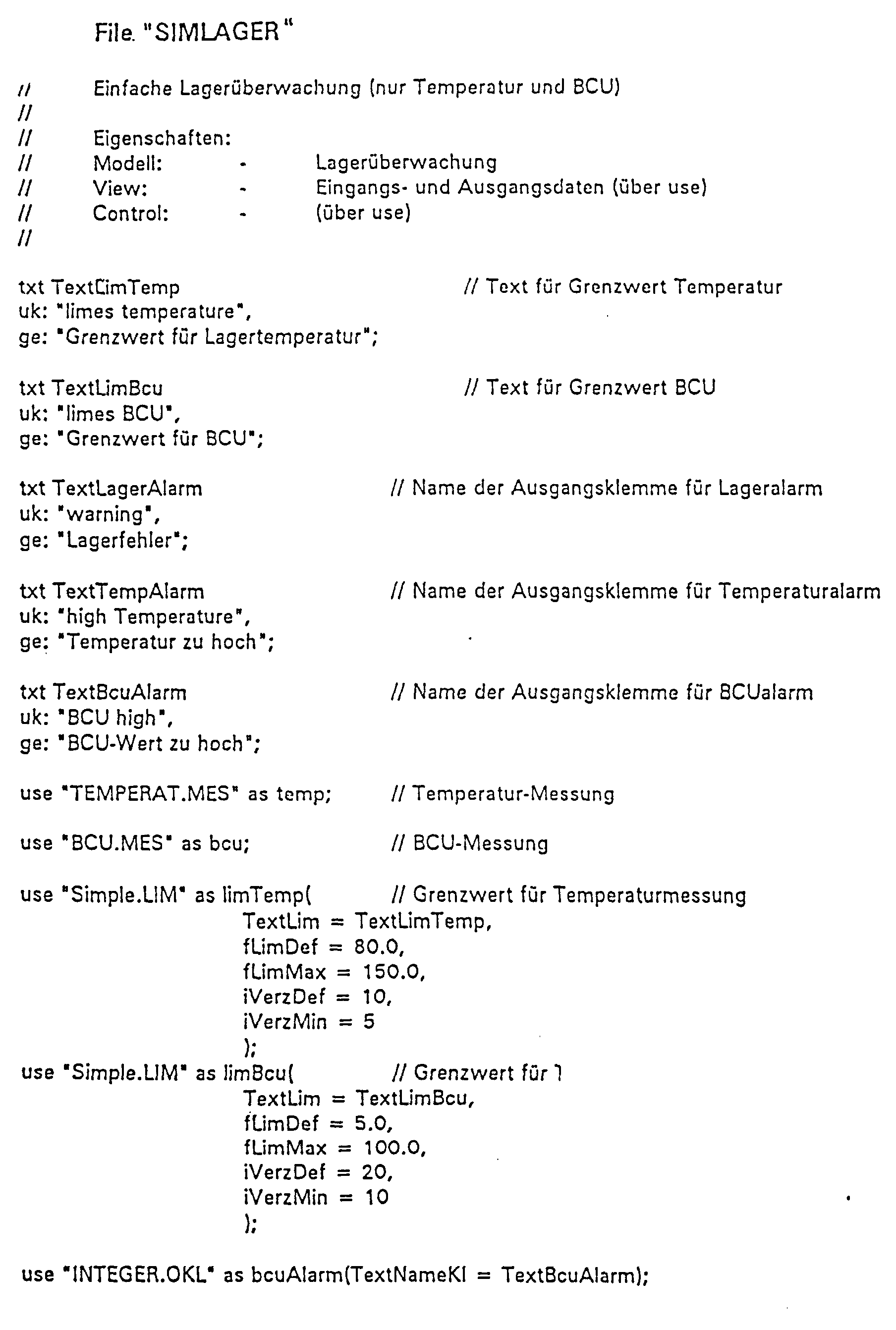

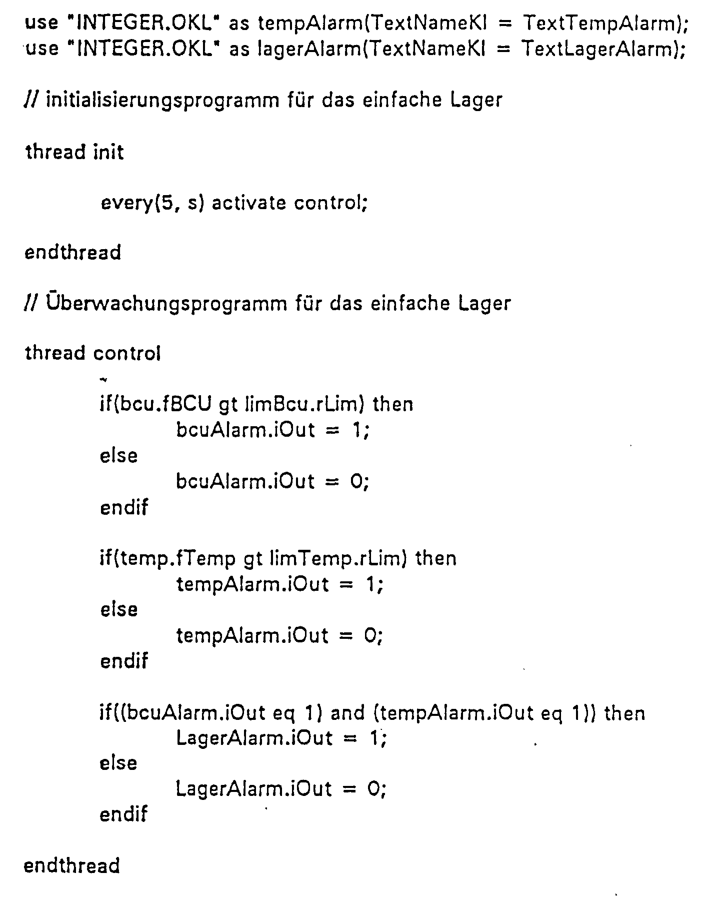

Aus dem Maschinenobjekt SIMLAGER.PR (Lager) und dem hier nicht näher erläuterten Maschinenobjekt SIM_VIB (Vibration) ergibt sich bei der Gesamt-Vibrationsüberwachung das Superobjekt SIM_DIAG, (Fig. 6). Die Auswertung erfolgt anhand üblicher "scharfer" Regeln; die Maschinenobjekte und das Superobjekt können jedoch auch mit Fuzzy-Regeln formuliert sein wie dies am Maschinenobjekt LAGER.UEB ersichtlich ist.

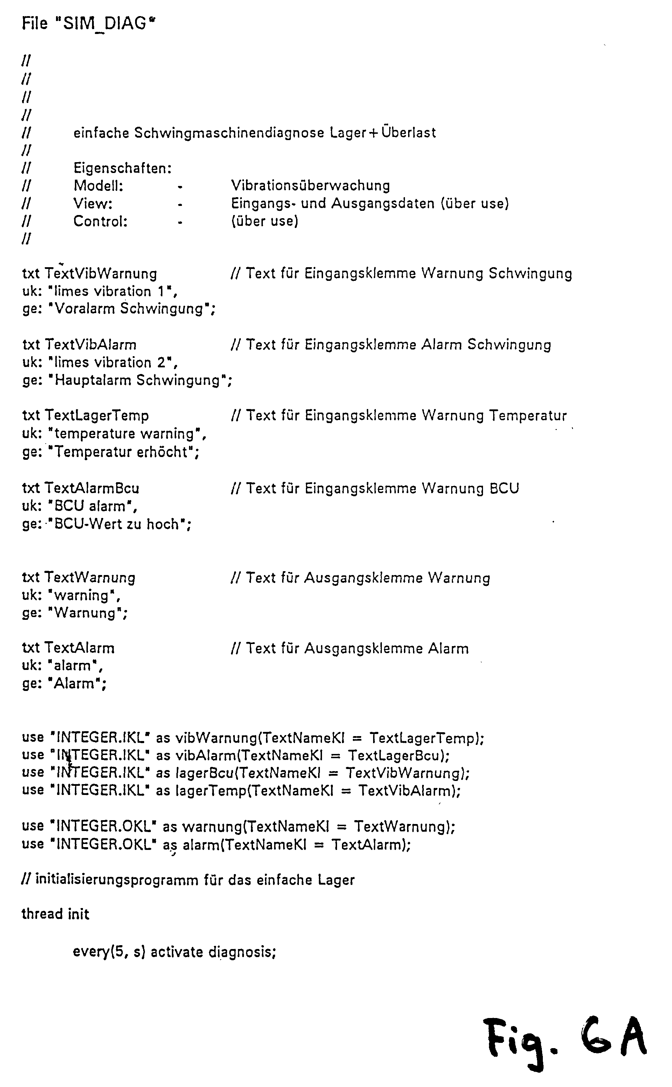

In Fig. 5 ist als weiteres Beispiel dargestellt die Gesamtüberwachung einer Schwingmaschine mit Schwingungserregern, kurz "Erregerüberwachung". Die bereits realisierten Module bzw. Maschinenobjekte Lagerüberwachung 20, Drehzahlüberwachung 21 und Abrißüberwachung 22 (Fig. 5, linker Teil) werden in der Gesamtüberwachung (Superobjekt) miteinander kombiniert (Fig. 5, rechter Teil), um eine aussagekräftige Überwachungsinformation zu liefern.

In der Darstellung in Fig. 5, linker Teil repräsentiert der Modul-Block "Lagerüberwachung" z. B. den Programm-Code des oben aufgelisteten Lagerüberwachungsprogramms LAGER.UEB

In der Darstellung in Fig. 5, rechter Teil repräsentiert die Zeile "use Lagerüberwachung" im Programm-Code Block 23 das Abarbeiten des Programm-Moduls "LAGER UEB".

Es ist damit in vorteilhafter Weise erreicht, daß die Daten und die Funktionalität von Überwachungs-Komponenten sich in wenigen Zeilen Programm-Code der nächsten übergeordneten Komponente, in diesem Fall des Superobjekts Erregerüberwachung, wiederfindet.

## Patentansprüche

1. Verfahren zur Überwachung einer Maschine oder Anlage, bei dem die Gesamtüberwachung der Maschine oder Anlage durch die Verknüpfung von Teilüberwachungen dargestellt wird, bei dem Signale von Sensoren an der Maschine oder Anlagenteilen erfaßt und einer Signalaufbereitung zugeführt werden und bei dem die aufbereiteten Signale mittels eines adaptiven regelbasierten Verfahrens bewertet werden, **dadurch gekennzeichnet, daß** in den Teilüberwachungen jeweils einem Maschinenobjekt ein oder mehrere Sensoren zugeordnet werden und für jede Teilüberwachung eine Regelbasis erstellt wird, anschließend die Signale des Sensors/der Sensoren als Eingangssignale einer Überwachungseinheit zugeführt werden, die die Eingangssignale mittels eines adaptiven regelbasierten Verfahrens zu Ausgangsgrößen verarbeitet und anschließend die Ausgangsgrößen der Teilüberwachungen der Gesamtüberwachung einer Maschine oder Anlage zugeführt werden und in der Gesamtüberwachung diese Ausgangsgrößen mit konventioneller oder Fuzzy-Logik bewertet und zu einer Überwachungsinformation zusammengefaßt werden.

2. Verfahren nach Anspruch 1, **dadurch gekennzeichnet, daß** zum Aufbau der Regelbasis die Fuzzy-Logik Verwendung findet.

3. Verfahren nach einem der vorhergehenden Ansprüche, **dadurch gekennzeichnet, daß** die Maschinenobjekte aus Programm-Modulen erzeugt werden.

4. Verfahren nach Anspruch 3, **dadurch gekennzeichnet, daß** die Kombination der Maschinenobjekte Programmabläufe entsprechend den zugeordneten Programm-Modulen bewirkt.

## Claims

1. A method of monitoring a machine or plant in which the overall monitoring of the machine or plant is represented by the logical combination of sub monitoring processes wherein signals from sensors on the machine or on parts of the plant are detected and subjected to a preliminary signal processing operation and wherein the preliminary processed signals are assessed by means of an adaptive rule-based procedure, **characterised in that** one or more sensors are associated with a respective machine object in the sub monitoring processes and a rule base is established for each sub monitoring process, whereafter the signals from the sensor/sensors are supplied in the form of input signals to a monitoring unit which processes the input signals into output variables by means of an adaptive rule-based procedure and thereafter the output variables of the sub monitoring processes are supplied to the overall monitoring system of a machine or plant and these output variables are evaluated in the overall monitoring system using conventional or fuzzy logic and combined into monitoring information.

2. A method in accordance with Claim 1, **characterised in that** use is made of fuzzy logic for constructing the rule base.

3. A method in accordance with any of the preceding Claims, **characterised in that** the machine objects are produced from program modules.

4. A method in accordance with Claim 3, **characterised in that** the combination of machine objects results in program sequences corresponding to the associated program modules.

## Revendications

1. Procédé de surveillance d'une machine ou d'une installation, dans lequel la surveillance d'ensemble de la machine ou de l'installation est constituée par la combinaison de surveillances partielles, dans lequel des signaux provenant de capteurs sont détectés sur la machine ou sur des parties de l'installation et sont transmis à un traitement des signaux et dans lequel les signaux traités sont évalués au moyen d'un procédé d'adaptation fondé sur une régulation, **caractérisé en ce que** dans les surveillances partielles, un ou plusieurs capteurs sont affectés à un objet de machine et pour chaque surveillance partielle il est établi une base de règle, ensuite les signaux du capteur/des capteurs sont transmis en tant que signaux d'entrée à une unité de surveillance qui traite les signaux d'entrée, au moyen d'un procédé d'adaptation fondé sur une régulation, pour obtenir des grandeurs de sortie, et ensuite les grandeurs de sortie des surveillances partielles sont transmises à la surveillance d'ensemble d'une machine ou d'une installation, et dans la surveillance d'ensemble, ces grandeurs de sortie sont évaluées au moyen d'une logique classique ou d'une logique floue et réunies en une information de surveillance.

2. Procédé selon la revendication 1, **caractérisé en ce que** pour constituer la base de la régulation, on utilise la logique floue.

3. Procédé selon l'une des revendications précédentes, **caractérisé en ce que** les objets machine sont produits à partir des modules de programme.

4. Procédé selon la revendication 3, **caractérisé en ce que** la combinaison des objets machine entraîne des séquences de programme en fonction des modules de programme associés.
